Europäisches Patentamt

European Patent Office

Office européen des brevets

(11) Veröffentlichungsnummer: **0 410 212 A2**

# EUROPÄISCHE PATENTANMELDUNG

(21) Anmeldenummer: 90113285.2

(22) Anmeldetag: **11.07.90**

(51) Int. Cl.5: **G06F 1/12, G06F 11/18**

(30) Priorität: 27.07.89 DE 3924907

(43) Veröffentlichungstag der Anmeldung:
**30.01.91 Patentblatt 91/05**

(84) Benannte Vertragsstaaten:
**AT BE DE FR GB NL**

(71) Anmelder: **Siemens Aktiengesellschaft**
**Wittelsbacherplatz 2**
**D-8000 München 2(DE)**

(72) Erfinder: **Schwartz, Rolf, Dipl.-Ing.**
**Südring 59**
**D-6747 Annweiler(DE)**

(54) **Redundante Taktgeberanordnung.**

(57) Eine zweikanalige, federtolerante Taktgeberanordnung enthält zwei Taktgeber (TG1, TG2), die je einen Oszillator (Q1, Q2) enthalten. Die Frequenz des Oszillators des einen Taktgebers (TG1) ist niedriger als die des anderen, synchronisierten Taktgebers (TG2). Dieser vergleicht die Phasendifferenz zwischen seinem Ausgangssignal und dem des anderen. Überschreitet die Phasendifferenz einen vorgegebenen Betrag, wird ein Impuls aus dem Ausgangssignal des Oszillators (Q2) ausgeblendet.

Die Erfindung wird angewandt bei redundante Prozeßsteuer- und -leitsystemen.

FIG 1

## REDUNDANTE TAKTGEBERANORDNUNG

Zur Automatisierung von Anlagen mit erhöhten Verfügbarkeitsanforderungen werden in zunehmendem Maße hochverfügbare, redundante Prozeßsteuer- und -leitsysteme eingesetzt. Eine Möglichkeit, in solchen Systemen Fehler zu erkennen, besteht darin, daß die Teilsysteme taktsynchron arbeiten und dadurch ein ständiger bitweiser Vergleich der Signale in den beiden Teilsystemen möglich ist. Da die Taktsignalerzeugung eine zentrale Funktion ist, deren Ausfall sich auf das gesamte System auswirkt, wird die Taktgeberanordnung redundant ausgeführt.

Redundante Taktgeberanordnungen sind mehrfach bekannt, z. B. aus der DE-AS 23 60 450, der DE-PS 24 23 276 und der DE-OS 29 38 043. Diesen bekannten Anordnungen ist gemeinsam, daß sie je Kanal einen Taktgeber mit einem freilaufenden Oszillator enthalten. Die Ausgangssignale der Taktgeber werden in einer Majoritätsschaltung miteinander verknüpft, deren Ausgangssignale nicht nur die Taktsignale für die Teilsysteme sind, sondern auch für die Synchronisation der einheitlich aufgebauten Taktgeber herangezogen werden.

Der vorliegenden Erfindung liegt die Aufgabe zugrunde, eine redundante Taktgeberanordnung zu schaffen, mit der Taktimpulse hoher Frequenz mit kleiner gegenseitiger Phasenverschiebung und geringen Unterschieden des Tastverhältnisses und der Periodendauer erzeugt werden können.

Erfindungsgemäß wird diese Aufgabe mit den im kennzeichnenden Teil des Anspruchs 1 angegebenen Maßnahmen gelöst.

Während bei den bekannten Taktgeberanordnungen die Oszillatoren möglichst mit derselben Frequenz schwingen, ist in der neuen Anordnung die Frequenz unterschiedlich, und zwar in der Weise, daß die Oszillatorfrequenz des führenden Taktgebers, auf dessen Ausgangsfrequenz die anderen Taktgeber synchronisiert werden, niedriger ist als die der anderen Taktgeber, die auf die Frequenz des führenden Taktgebers synchronisiert werden. Prinzipiell ist es auch möglich, die Oszillatoren der synchronisierten Taktgeber mit einer niedrigeren Frequenz als der des führenden Taktgebers schwingen zu lassen. Dies hätte aber den Nachteil, daß zur Synchronisation je ein Impuls in eine Impulsfolge eingefügt werden müßte, was vor allem bei hohen Frequenzen schwieriger als das Ausblenden eines Impulses ist.

Bei einer Untersetzung von n:1 der Frequenzuntersetzer wird beim Ausblenden eines Oszillatorimpulses die Pulsdauer am Ausgang des Taktgebers um ein n-tel verlängert. Je höher also das Untersetzungsverhältnis ist, um so weniger wird das Tastverhältnis durch das Ausblenden eines Impulses verändert. Den Unterschied der Frequenz des Oszillators des führenden Taktgebers und der der synchronisierten Taktgeber wählt man vorteilhaft möglichst klein, damit nur selten eine Frequenzkorrektur vorgenommen werden muß. Man wird daher den Frequenzabstand gerade so groß wählen, daß die Oszillatorfrequenz des führenden Taktgebers stets kleiner ist als die Oszillatorfrequenz der synchronisierten Taktgeber. Im allgemeinen liegt die Frequenzabweichung zwischen $10^{-3}$ und $10^{-6}$, vorteilhaft beträgt sie bei Verwendung von Quarzoszillatoren etwa $10^{-5}$. Eine solche Frequenzabweichung ist so gering, daß, wenn der führende Taktgeber ausfällt, das System mit der geringfügig höheren Frequenz des synchronisierten Taktgebers weiterbetrieben werden kann. Auch ist in einem solchen Störungsfall ein Umschalten der Oszillatorfrequenz möglich.

Für den Betrieb von redundanten Systemen, bei denen ein bitweiser Vergleich durchgeführt wird, kommt es nicht darauf an, daß die Taktimpulse der Teilsysteme konstante Frequenz oder Tastverhältnisse haben, sondern es ist wichtig, daß die Taktimpulse in den Teilsystemen stets gleich sind, d. h., daß sie nur geringe relative Änderungen des Tastverhältnisses und der Periodendauer haben und daß auch nur geringe Phasenverschiebungen auftreten. Die durch die Synchronisation der Taktgeber bedingte Impulsverlängerung ist so lange unschädlich, als nicht im Vergleich zu den Ausgangsimpulsen des führenden Taktgebers eine unzulässig große Impulsverbreiterung oder Phasendifferenz auftritt. Es ist daher vorteilhaft, den Frequenzteilern eine Anordnung, z. B. eine Majoritätsschaltung, nachzuschalten, welche die Ausgangsimpulse der Taktgeber einander anpaßt. Da die neue Taktgeberanordnung bevorzugt für zweikanalige Systeme mit zwei Taktgebern vorgesehen ist, sind vorteilhaft an die Frequenzteiler zwei übereinstimmende Impulsformer angeschlossen, welche die Taktgebersignale in gleicher Weise logisch verknüpfen und somit zwei Impulsfolgen mit stets übereinstimmenden Impulsen abgeben.

Anhand der Zeichnung, in der ein Ausführungsbeispiel dargestellt ist, werden im folgenden die Erfindung sowie weitere Ausgestaltungen und Ergänzungen näher beschrieben und erläutert.

Es zeigen

Figur 1 das Prinzipschaltbild einer zweikanaligen Taktgeberanordnung und

Figur 2 Diagramme von in der Anordnung nach Figur 1 auftretenden Impulsen.

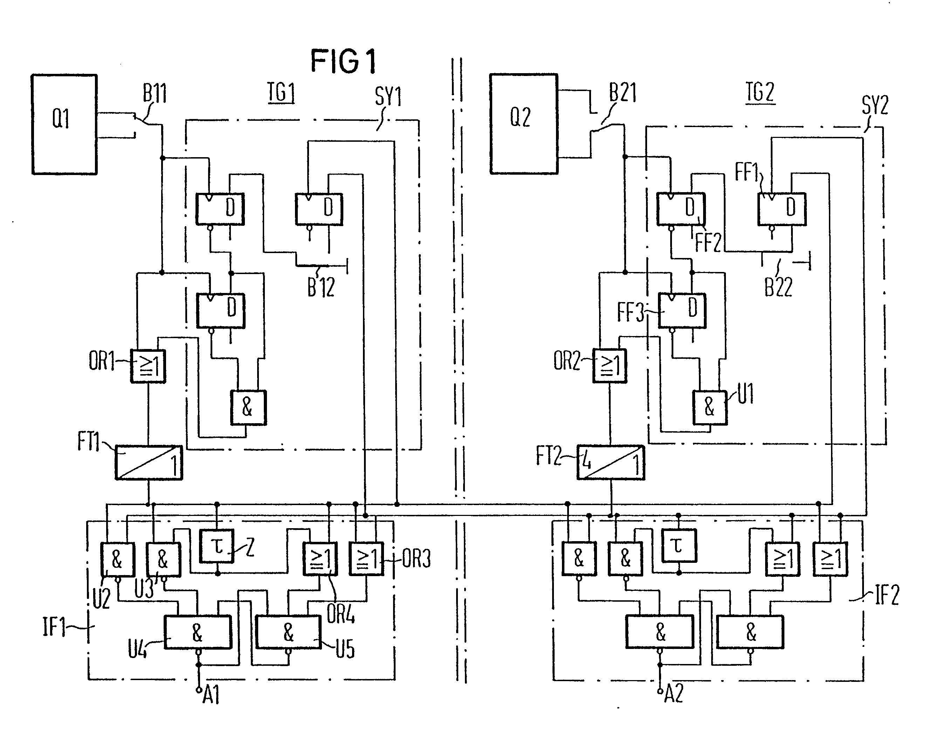

In Figur 1 sind mit TG1, TG2 zwei Taktgeber bezeichnet, die je einen mittels einer Brücke B11 bzw. B21 in der Frequenz umschaltbaren Oszillator Q1, Q2 enthalten. In der Stellung der Brücke B11 beträgt die Frequenz im Ausführungsbeispiel 80 MHz, in der Stellung der Brücke B21 ist sie geringfügig größer, nämlich 80,001 MHz. Die Taktgeber TG1, TG2 enthalten ferner je eine Synchronisierschaltung SY1, SY2, einen Frequenzteiler FT1, FT2 mit einem vorgeschalteten, von der Synchronisierschaltung SY1, SY2 gesteuerten ODER-Glied OR1, OR2 und einen Impulsformer IF1, IF2. Mittels Brücken B12, B22, die in den Synchronisierschaltungen SY1, SY2 enthalten sind, können diese ein- und ausgeschaltet werden.

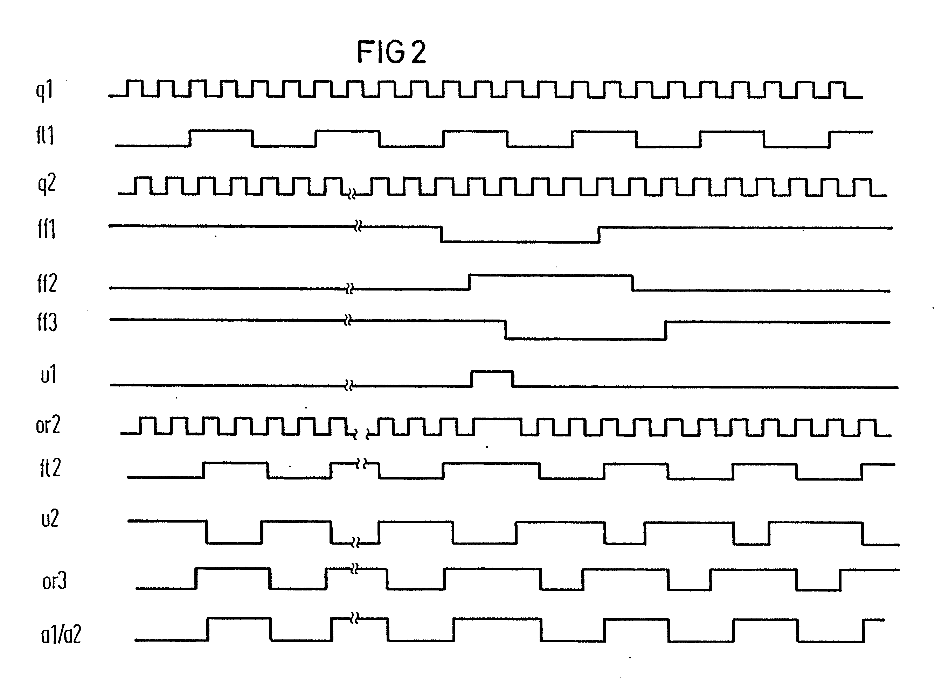

Die mit Kleinbuchstaben bezeichneten Diagramme der Figur 2 veranschaulichen den Zeitverlauf von Impulsen, die am Ausgang der mit entsprechenden Großbuchstaben bezeichneten Schaltungsteilen der Anordnung nach Figur 1 auftreten. Das Ausgangssignal q1 des Quarzoszillators Q1, das im Ausführungsbeispiel eine Frequenz von 80 MHz hat, wird über ein ODER-Glied OR1 einem Frequenzteiler FT1 zugeführt, der im Ausführungsbeispiel die Frequenz von 80 MHz im Verhältnis 4:1 auf 20 MHz, der Ausgangsfrequenz des Taktgebers, herabsetzt. Der Quarzoszillator Q1 ist also auf eine Frequenz eingestellt, die sich durch Multiplikation der gewünschten Ausgangsfrequenz mit dem Untersetzungsverhältnis des Frequenzteilers FT1 ergibt. Das Ausgangssignal q2 des Quarzoszillators Q2 ist geringfügig um einen solchen Betrag höher, daß auch im Falle von Frequenzschwankungen die Frequenz stets höher bleibt, als die des Signals q1. Bei einer Frequenzstabilität von $10^{-6}$ genügt ein Frequenzabstand, der nicht unnötig groß sein soll, von $10^{-5}$. Das Signal q2 gelangt über ein Odergled OR2 als Signal or2 auf einen Frequenzteiler FT2, der, wie der Frequenzteiler FT1, ein Untersetzungsverhältnis von 4:1 hat. Damit seine mittlere Ausgangsfrequenz gleich der des Frequenzteilers FT1 ist, werden mittels des ODER-Gliedes OR1 Impulse aus dem Signal q2 ausgeblendet. Hierzu werden die Ausgangssignale ff1, ff2 der Frequenzteiler FT1, FT2 hinsichtlich ihrer Phase in einem D-Flip-Flop FF1, die in der Synchronisierschaltung SY2 enthalten ist, miteinander verglichen. Dessen D-Eingang ist das Signal ff1, dessen Takteingang das Signal ff2 zugeführt. Das Flip-Flop FF1 übernimmt bei den positiven Flanken des Signals ff1 den jeweiligen Zustand des Signals ff2. Selbstverständlich können für den Phasenvergleich auch andere bekannte Schaltungen eingesetzt werden. In den Diagrammen der Figur 2 läuft zunächst das Signal ff1 dem Signal ff2 vor. Die positive Flanke des Signals ff2 tritt daher im Binärsignalzustand "1" des Signals ff1 auf, so daß auch das Ausgangssignal ff1 des Flip-Flops FF1 zunächst "1" ist. Dieses Signal wird dem D-Eingang eines weiteren D-Flip-Flops FF2 zugeführt, an dessen Takteingang das Ausgangssignal q2 liegt und das dazu dient, einen etwaigen Signalwechsel am Ausgang des Flip-Flops FF1 auf das Taktsignal q2 einzusynchronisieren. An seinem invertierenden Ausgang tritt ein Signal ff2 auf, das zunächst "0" ist. Dieses liegt am D-Eingang eines dritten Flip-Flops FF3, dessen Takteingang ebenfalls das Signal q2 zugeführt ist. An dessen invertierenden Ausgang liegt ein Signal ff3, das in einem UND-Glied U1 mit dem Signal ff2 zu einem Signal u1 verknüpft wird, mit welchem das ODER-Glied OR2 gesteuert wird. Das Flip-Flop FF3 und das UND-Glied U1 haben die Aufgabe, im Falle eines Signalwechsels am Ausgang des Flip-Flops FF1 einen log. "1"-Impuls von der Periodendauer des Taktsignals q2 zu erzeugen.

Wegen der höheren Frequenz des Signals ff2 gegenüber dem Signal ff1 wird der Abstand zwischen den positiven Flanken dieser beiden Signale immer kleiner, bis schließlich das Signal ff2 dem Signal ff1 voreilt und das Flip-Flop FF1 umgeschaltet wird. Mit der nächsten positiven Flanke des Taktsignals q2 wird dann auch das Flip-Flop FF2 geschaltet, dessen Ausgangssignal ff2 wird "1" und damit auch das Ausgangssignal u1 des UND-Gliedes U1. Das ODER-Glied OR1 ist damit für die Impulse q2 gesperrt. Mit dem nächsten Impuls q2 wird der log. "1"-Zustand des Signals ff2 in das Flip-Flop FF3 übernommen, so daß das Signal ff3 "0" wird und die UND-Bedingung nicht mehr erfüllt ist. Das Signal u1 wird daher wieder "0". Während dessen log. "1"-Zustand wurde aus der dem Frequenzteiler FT2 zugeführten Impulsfolge or3 genau ein Impuls ausgeblendet, so daß dessen Ausgangsimpuls um eine Taktimpulsperiode verlängert ist. Das Signal ff2 läuft daher wieder dem Signal ff1 nach. Die Häufigkeit dieses Synchronisiervorgangs hängt ab von der Frequenzdifferenz zwischen den Signalen q1 und q2; beträgt, wie im Ausführungsbeispiel, die Frequenzdifferenz $10^{-5}$, so wird nur jeder $10^{-5}$te Impuls ausgeblendet.

Im Rahmen der Erfindung kann die beschriebene Synchronisierschaltung mannigfach geändert werden. Wesentlich ist lediglich, daß ein Phasenvergleich zwischen den Ausgangssignalen ff1, ff2 durchgeführt wird und daß, wenn eine vorgegebene Phasendifferenz überschritten wird, ein Taktimpuls ausgeblendet wird.

Die besondere Art der Synchronisierung bewirkt, daß die beiden Signale f1, f2 sich stets gegeneinander verschieben, wobei die maximale Phasenverschiebung bei einer Frequenzuntersetzung von 4:1 90° ist. Da die Ausgangsimpulse für zweikanalige, taktsynchron arbeitende Datenverarbeitungsanlagen verwendet werden sollen, kann eine solche Phasenverschiebung störend sein. Zwar kann man die Phasenverschiebung durch Erhöhen der Frequenzuntersetzung verkleinern, doch erfordert dies bei gegebener Ausgangsfrequenz eine entsprechende Erhöhung der Frequenz der Quarzoszillatoren. Damit die Ausgangsimpulse der beiden Taktgeber auch bei niedriger Frequenzuntersetzung gleiche Phasenlage und Impulsdauer haben, sind im Ausführungsbeispiel Impulsformer IF1, IF2 vorgesehen. Da diese übereinstimmend aufgebaut sind, genügt die Beschreibung des Impulsformers IF1. Zwei NAND-Glieder U4, U5 mit je drei Eingängen sind zu einem RS-Flip-Flop geschaltet. Einem NAND-Glied U2, an das ein Eingang des NAND-Gliedes U4 angeschlossen ist, und einem ODER-Glied OR3, dessen Ausgang mit einem Eingang des NAND-Gliedes U5 verbunden ist, sind die Ausgangssignale ff1, ff2 der Frequenzteiler zugeführt. Ein Zeitglied Z verzögert die Impulse ff1; an seinen Ausgang sind die einen Eingänge eines NAND-Gliedes U3 und eines ODER-Gliedes OR4 angeschlossen, deren andere Eingänge mit dem Ausgang des Frequenzteilers FT1 verbunden sind und an die je ein weiterer Eingang des NAND-Gliedes U4 bzw. U5 angeschlossen sind.

Der im Taktgeber TG2 enthaltene Impulsformer IF2 ist in gleicher Weise aufgebaut wie der Impulsformer IF1. Ein Unterschied besteht lediglich darin, daß sein Zeitglied sowie das dem NAND-Glied U3 entsprechende NAND-Glied und das dem ODER-Glied OR4 entsprechende ODER-Glied nicht an den Frequenzteiler FT1, sondern an den Frequenzteiler FT2 angeschlossen sind.

Die maximale Phasendifferenz zwischen den Signalen ff1, ff2 beträgt eine Periode des Signals q1 bzw. des Signals q2. Auf diese Periodendauer sind die Zeitglieder eingestellt. Im Normalfalle, wenn beide Taktgeber einwandfrei arbeiten, wird das RS-Flip-Flop mit den NAND-Gliedern U4, U5 gesetzt, wenn beide Signale ff1, ff2 log. "1" sind. Das Signal u1 wird dann log. "0" und das Ausgangssignal a1 des Taktgebers TG1 an seinem Ausgang A1 log. "1". Dieser Signalzustand wird so lange aufrechterhalten, bis beide Signale ff1, ff2 und damit das Signal r3 "0" wird. Das Ausgangssignal a1 wird dann ebenfalls "0". Dieses wird also jedesmal dann, wenn beide Signale ff1, ff2 log. "1" sind, log. "1", und dann, wenn beide Signale "0" sind, log. "0". Da beide Impulsformer IF1, IF2 die Signale ff1, ff2 in gleicher Weise verknüpfen, sind die Signale a1, a2 an ihren Ausgängen A1, A2 identisch.

Fällt ein Taktgeber aus, wird das Zeitglied des jeweils anderen Taktgebers wirksam. Ist z. B. das Signal ff2 konstant log. "0", ist das NAND-Glied U2 gesperrt. Nach Ablauf der im Zeitglied Z eingestellten Zeit, z. B. einer Periode des Quarzoszillators Q1, liegt aber an beiden Eingängen des NAND-Gliedes U3 "1"-Signal, dem NAND-Glied U4 wird dann "0"-Signal zugeführt, so daß das Ausgangssignal a1 log. "1" wird. Wird das Signal ff1 "0", hält das Zeitglied Z das RS-Flip-Flop U4, U5 noch für eine Periode des Signmals al im gesetzten Zustand, um es dann über das ODER-Glied OR4 zurückzusetzen. In manchen Anwendungsfällen kann es vorteilhaft sein, die Verzögerung des Zeitgliedes kleiner als eine Periode des Quarzoszillators Q1 bzw. Q2 einzustellen.

Ist das Signal ff2 konstant log. "1", wird das RS-Flip-Flop U4, U5 mit dem Signal ff1 gesetzt; die Rücksetzung erfolgt mit dem Ende des Ausgangsimpulses des Zeitgliedes Z.

Die Erfindung wurde anhand eines Ausführungsbeispiels erläutert, das Taktimpulse für ein zweifach redundantes System liefert. Eine Erweiterung auf ein mehrfach redundantes System, z. B. auf ein 2v3- oder ein 2v4-System ist ohne weiteres möglich, wenn als Impulsformer, die dann ebenfalls mehrfach vorhanden sein müssen, bekannte Majoritätsschaltungen verwendet werden und wenn dafür gesorgt ist, daß bei Ausfall des führen den Taktgebers ein synchronisierter Taktgeber durch Umschalten der Brücken Bi1, Bi2 zum führenden Taktgeber wird.

Die für das Ausführungsbeispiel verwendeten binären Schaltkreise und ihre Zusammenschaltung können im Rahmen der Erfindung nach den bekannten Regeln der binären Logik durch andere Schaltkreise ersetzt werden.

## Ansprüche

1. Redundante Taktgeberanordnung mit mehreren Taktgebern (TG1, TG2), die je einen Oszillator (Q1, Q2) enthalten, aus dessen Impulsen Systemtaktimpulse abgeleitet werden, **dadurch gekennzeichnet,**
- daß die Frequenz des Oszillators (Q1) eines führenden Taktgebers (TG1) stets niedriger ist als die der Oszillatoren (Q2) von synchronisierten Taktgebern (TG2),
- daß die Ausgangssignale der Oszillatoren (Q1, Q2) je einem Frequenzteiler (FT1, FT2) zugeführt sind, wobei die Frequenzteiler das gleiche Untersetzungsverhältnis haben,
- daß die synchronisierten Taktgeber (TG2) je eine Synchronisierschaltung (SY2) enthalten, welche die Phasendifferenz zwischen den Ausgangsimpulsen des zugehörigen Frequenzteilers (FT2) mit denen des Frequenzteilers (FT1) des führenden Taktgebers (TG1) vergleicht und bei Voreilen der Impulse des zugehörigen Frequenzteilers (FT2) um mehr als einen vorgegebenen Betrag einen Sperrimpuls auf eine im Signalweg zwischen dem Oszillator (Q2) und dem Frequenzteiler (FT2) liegende Torschaltung (OR2) gibt, die einen Oszillatorimpuls ausblendet.

2. Taktgeberanordnung nach Anspruch 1, **dadurch gekennzeichnet, daß** die Taktgeber (TG1, TG2) einheitlich aufgebaut sind, die Oszillatoren (Q1, Q2) auf zwei Frequenzen umschaltbar und die Synchronisierschaltungen (SY1, SY2) abschaltbar sind.

3. Taktgeberanordnung nach Anspruch 1 oder 2, **dadurch gekennzeichnet,** daß die Synchronisierschaltungen (SY1, SY2) für den Phasenvergleich je eine bistabile Kippstufe, vorzugsweise ein D-Flip-Flop (FF1) enthalten, deren einen Eingang das Ausgangssignal des zugehörigen Frequenzteilers (FT2) und deren anderen Eingang das des Frequenzteilers (FT1) des führenden Taktgebers (TG2) zugeführt ist und an die das erste von zwei nach Art eines Schieberegisters in Reihe geschalteten bistabilen Kippstufen (FF2, FF3) angeschlossen ist, denen als Taktsignale die Ausgangsimpulse des zugehörigen Oszillators (Q2) zugeführt sind, und daß die beiden Eingänge eines den im Signalweg zwischen dem Oszillator (Q2) und dem Frequenzteiler (FT2) liegenden logischen Verknüpfungsgliedes (U1) mit dem Ein- und dem Ausgang der zweiten bistabilen Kippstufe (FF3) der schieberegisterähnlich hintereinandergeschalteten bistabilen Kippstufen (FF2, FF3) verbunden sind.

4. Taktgeberanordnung nach einem der Ansprüche 1 bis 3, **dadurch gekennzeichnet,** daß jeder Taktgeber (TG1, TG2) eine Majoritätsschaltung enthält, welche die Ausgangssignale (ff1, ff2) aller Frequenzteiler nach einer Mehrheitsentscheidung miteinander verknüpft und deren Ausgangssignal ein Systemtaktsignal ist.

5. Taktgeberanordnung nach Anspruch 4, **dadurch gekennzeichnet,** daß jeder von zwei Taktgebern (TG1, TG2) einen Impulsformer (IF1, IF2) aufweist, in dem die Ausgangssignale (ff1, ff2) der Frequenzteiler (FT1, FT2) nach einer UND- und einer ODER-Funktion miteinander verknüpft werden und der eine bistabile Kippstufe (U4, U5) enthält, deren Setz-und deren Rücksetzeingang die mit den durch die UND- bzw. die ODER-Verknüpfung gebildeten Signale zugeführt sind und deren Ausgangssignal das Systemtaktsignal ist.

6. Taktgeberanordnung nach Anspruch 5, **dadurch gekennzeichnet,** daß der Impulsformer (IF1) ein Zeitglied (Z) enthält, das die Impulse des im jeweils gleichen Taktgeber enthaltenen Frequenzteilers (FT1, FT2) zwischen Null und mindestens einer Taktperiode des Oszillators (Q1), vorzugsweise um eine Taktperiode verzögert, und dessen Ausgangssignal nach einer UND-und einer ODER-Funktion mit dem Ausgangssignal des im selben Taktgeber enthaltenen Frequenzteilers (FT1, FT2) verknüpft wird und daß die Verknüpfungsergebnisse je einem weiteren Setz- bzw., Rücksetzeingang der bistabilen Kipp stufe zugeführt sind, wobei die den Setz- und die den Rücksetzeingängen zugeführten Signale jeweils nach einer UND-Funktion verknüpft sind.

FIG 1

# FIG 2

q1

ft1

q2

ff1

ff2

ff3

u1

or2

ft2

u2

or3

a1/a2

EP 0 410 212 A2